# EUROPEAN PATENT APPLICATION

(11) **EP 4 671 107 A1**
(43) Date of publication of application: **31.12.2025**
(21) Application number: 24382697.1
(22) Date of filing: 28.06.2024
(51) Int. Cl.: B62M 6/45, B62K 23/02, B62K 23/06, B62J 1/08

(54) **CONTROL SYSTEM FOR ELECTRIC BICYCLE, MAIN CONTROL DEVICE AND AUXILIARY CONTROL DEVICE FOR SAID CONTROL SYSTEM**

(71) Applicant: ORBEA, S. COOP., 48269 Mallabia (BIZKAIA) (ES)
(72) Inventor: PRIETO NÚÑEZ, Sergio, 20230 Legazpia (Gipuzkoa) (ES)
(74) Representative: Cueto, Sénida

(57) **Abstract**

The invention discloses a control system for electric bicycle comprising a main controller (10) and an auxiliary controller (20) mechanically couplable one to the other. The main controller (10) controls the power of the pedal assist motor and can be used alone. The auxiliary controller (20), once installed, in practice implies the addition of a button to the main controller (10) for controlling any additional electric device, such as e.g. the telescopic seatpost, the shock absorbers, etc.

## Description

### Object of the invention

The present invention belongs to the field of bicycles, and more particularly to the control of the electric devices of an electric bicycle.

A first aspect of the present invention is directed to a control system for an electric bicycle comprising a main controller and an auxiliary controller which can be selectively coupled to said main controller.

A second aspect of the present invention is directed to a main controller compatible with the aforementioned system.

A third aspect of the present invention is directed to an auxiliary controller compatible with said system.

### State of the art

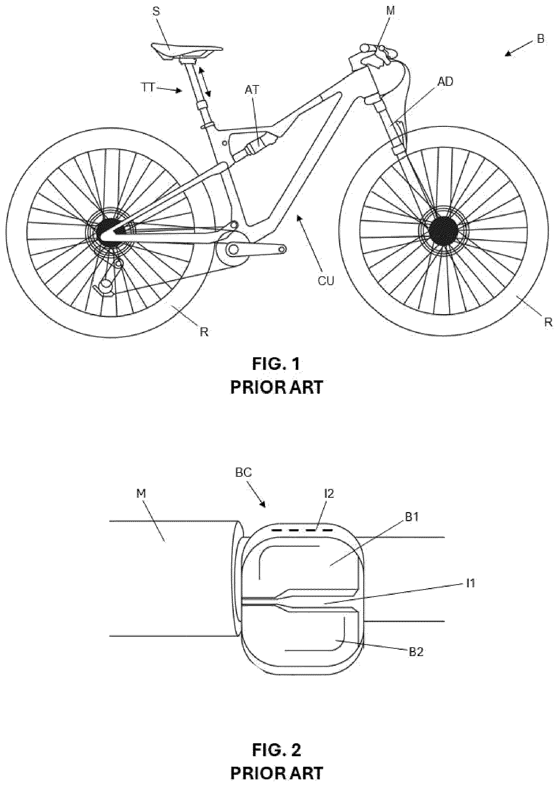

It is well known that bicycles have several devices designed to modify their behaviour depending on the needs of the cyclist. An example of this type of devices is the telescopic seatpost, which is mounted to the vertical tube of the frame of the bicycle to enable a vertical displacement of the seat when required by the cyclist. Another example are the shock absorbers, whose hardness can be regulated depending on the needs of the cyclist. Fig. 1 shows an exemplary bicycle (B) mainly formed by the frame (CU), wheels (R) and handlebar (M). As shown, this bicycle (B) may also comprise a telescopic seatpost (TT) to enable the displacement of the seat (S), as well as front (AD) and rear (AT) shock absorbers. The locked/unlocked conditions of the telescopic seatpost (TT) and the hardness of the shock absorbers (AD, AT) are controllable by means of certain known regulation elements.

Traditionally, the actuation of the regulation elements of these devices (TT, AD, AT) takes place by means of controllers provided at the handlebar (M). Specifically, the controllers placed at the handlebar (M) are connected to respective steel cables whose opposite end is fixed to the regulation element of the device (TT, AD, AT) in question. Thus, when the cyclist actuates the controller at the handlebar (M), a traction of the cable takes place that alters the position of the regulation element of the device (TT, AD, AT). For example, in the case of a telescopic seatpost (TT), the actuation of the controller causes the locking/unlocking of the vertical displacement, while in the case of the shock absorbers (AD, AT) it causes a hardness regulation knob to rotate.

Alternatively, to control these devices in recent years electric systems have been devised instead of the traditional steel cables. In this case, the controller provided at the handlebar has an electronic component having a button or the like that, when pushed by the cyclist, causes the activation of an electric element, such as a motor, that actuates the regulation element in question. For example, reference can be made to prior art document US2022135160A1 disclosing an electric actuation system for a bicycle telescopic seatpost. In this document, the pulsation of a button at the controller provided at the handlebar causes the actuation of an electric motor having a cam, which in turn selectively pushes the button unlocking the position of the telescopic seatpost.

On the other hand, it is well known that electric bicycles have an electronic control block fixed to the handlebar for the user to control the functions of the pedal assist electric motor. The electronic control block is an electronic device electrically connected to the battery of the bicycle and having several buttons to regulate the pedal assist modes and also having indicators to show useful information to know the state of the system and the battery. Fig. 2 shows an exemplary control block (BC) in an electric bicycle. As shown, this control block (BC) has two buttons (B1, B2), respectively for increasing or reducing the power of the pedal assist motor. The control block (BC) also has a first indicator (11) showing the current pedal assist mode and a second indicator (I2) showing the charge level of the battery.

In an electric bicycle having the aforementioned devices, all the control elements would be piled up at the handlebar. That is, the electronic control block of the pedal assist mode and the dedicated controllers to control the telescopic seatpost, the shock absorbers, as well as any other auxiliar device would be fixed to different places of the handlebar, thereby joining the usual devices to control the brakes and the gear shift. This accumulation of controllers may be uncomfortable for the cyclist, as well as having an unattractive aesthetic appearance.

When the abovementioned devices are controlled by means of electric systems of the type disclosed in document US2022135160A1 cited above, the drawbacks mentioned above can be solved by integrating all the control elements in the electronic control block of the bicycle. That is, the electronic control block would have buttons to control the pedal assist power and, further, additional buttons to control the auxiliary devices, such as the telescopic seatpost and the shock absorbers.

However, in many cases the cited devices are optional depending on the bicycle model. For example, a particular bicycle model may not include by default the telescopic seatpost; rather, the telescopic seatpost is bought and installed as an additional improvement for said bicycle model. In that case, the solution disclosed would entail the electronic control button having buttons for controlling the telescopic seatpost which, when not installed in the bicycle, are inactive i.e. useless. Naturally, this solution is also not ideal.

In short, it would be desirable having a solution to this problem that allows for the incorporation of auxiliary devices, such as the telescopic seatpost, in a more convenient manner.

### Brief disclosure of the invention

The inventors of the present invention solved the mentioned drawbacks by means of a system formed by a main controller and an auxiliary controller. The main controller serves to control the pedal assist models of the electronic bicycle, while the auxiliary controller controls a different auxiliary device, where both can be optionally mechanically coupled in a dismountable manner.

Thus, when the electric bicycle does not have the optional auxiliary device, the main controller is used alone for controlling the pedal assist motor. When the auxiliary device is to be installed, the auxiliary controller controlling said device is mechanically coupled to the main controller and interacts with it such that, for practical purposes, both make up a compact block.

Next, the three aspects of the present invention are disclosed, specifically the complete control system formed by the main and auxiliary controllers, the main controller and the auxiliary controller.

### Control system comprising a main controller and an auxiliary controller

A first aspect of the present invention is directed to a control system for an electric bicycle comprising a main controller and an auxiliary controller that is mechanically couplable to said main controller.

The main controller is configured to control the power of the pedal assist motor of the electric bicycle. Thereto, the main controller mainly comprises the following elements: a housing, a handlebar connection means joined to said housing, a processing means housed inside said housing, and pushbuttons provided at a front face of the housing and connected to said processing means to select different pedal assist modes.

The housing may have any configuration, although housings having an essentially square or rectangular with rounded edges are common. The processing means housed therein can be of any type provided it has enough processing capacity to control the power supplied by the pedal assist motor according to different predefined modes. For example, it can be a microcontroller, a microprocessor, a DSP (Digital Signal Processor), an FPGA (Field Programmable Gate Array), and ASIC (Application-Specific Integrated Circuit), or any other. Electrically connected to the processing means, and actuable from the front face of the housing, the pushbuttons enable the cyclist to increase or reduce the pedal assist power, select different pedal assist modes, and other additional functions. Although not explicitly mentioned, the main controller may also have light indicators electrically connected to the processing means to transmit the cyclist information in connection to the operation of the pedal assist mode, such as current assist power, battery charge level, and the like. Further, although also not disclosed in detail, the main controller also has cables connections joined to the elements to be controlled, such as the battery and the pedal assist motor. As to the handlebar connection means, it can be of any type known in the art. For example, the most common connection means include clamps and the like.

On the other hand, the auxiliary controller is configured to control an auxiliary device of the bicycle other than the pedal assist electric motor. As mentioned earlier, this auxiliary device could be anyone suitable to be controlled by means of electric signals. For example, a telescopic seatpost having an actuation electric motor or shock absorbers whose hardness is adjustable by means of an actuation electric motor causing the rotation of the corresponding regulation elements.

Until this point, the main an auxiliary controllers disclosed herein are similar to conventional controllers. However, the system of the present invention differs from the prior art in view of the following features.

First, the main controller comprises a control element electrically connected to the processing means, where said control elements is mechanically actuated from outside the housing. The control element could be of any type provided it can be mechanically actuated from outside the housing and that this mechanical actuation is translated into an electrical signal towards the processing means. In a particularly preferred embodiment of the invention, the control element is a button. However, other options are possible. For example, the control element could be a sliding element having a plurality of positions, a knob or dial, or any other.

Second, the auxiliary controller is mechanically couplable in a movable and dismountable manner to the main controller. As disclosed in further down in the present document, the type of mechanical coupling between the auxiliary controller and the main controller may be implemented in a number of alternative manners provided it allows for a movement (where a rotation, displacement, or a combination of both) or a deformation (for example, an elastic deformation) of the auxiliary controller generated manually by the cyclist that causes the mechanical actuation of the control element. That is, the coupling is designed in such a way that a manual actuation onto the auxiliary controller causes a movement of said auxiliary controller that, in turn, causes the mechanical actuation of the control element (in a particular case, the manual actuation of the auxiliary controller causes the pushbutton to be pushed). Further, the coupling is dismountable, in the sense that a person can couple and uncouple the auxiliary device to/from the main controller in a fast and simple manner. It's the kind of coupling provided by, e.g. a screw or bolt, a pressure fitting, a dovetail connection, or the like.

Naturally, the processing means is electrically connectable to the auxiliary device. This connection can be carried out in any suitable manner, where the expression *"electrically connectable"* or *"electric connection"* any connection transmitting an electric signal, as opposed to a mechanical connection. Further, an electric connection of this type includes both cabled connections and wireless connections, e.g. such as Bluetooth or the like. This electric connection with the auxiliary device in question, e.g. with the electric motor controlling the locked or unlocked condition of an electric seatpost, allows for the processing means to control the telescopic seatpost.

Indeed, when a manual actuation on the auxiliary controller causes the control element to be actuated, said processing means generates a control electric signal towards the auxiliary device of the bicycle.

This control system is very advantageous with respect to the systems known in the art. When there is no auxiliary device installed in the bicycle, the main controller can operate conventionally to control the pedal assist electric motor of the electric bicycle. The cyclist actuates the pushbuttons at the front face of the housing to increase or reduce the pedal assist power. The main controller is only visually different from a conventional main controller in that it has the cited control element which, as disclosed in detail further below, could be provided at a hidden area and thereby not have any visual impact. Another difference with respect to a conventional main controller which is also not externally visible is that the processing means is configured for controlling the auxiliary device in question, in the sense that it is programmed to carry out that function in response to the reception of the electric signal generated when the mentioned control element is mechanically actuated. However, in absence of any auxiliary controller, the control element is not actuated and, therefore, the corresponding part of the program of the processing means remains inactive.

Later on, when the cyclist decides to install an auxiliary device, such as the telescopic seatpost or any other that can be electrically controlled, he/she needs only to install the auxiliary controller and carry out the corresponding electric connection between the processing means of the main controller and the auxiliary device in question. The auxiliary controller is mechanically coupled to the main controller such that it is movable, that is, in such a manner as to allow the cyclist to actuate it in any way, normally by a pulsation. The movement of the auxiliary controller (or its deformation, an option that in the present document is included in the term *"movement*") caused by the actuation of the cyclist makes the auxiliary controller itself to actuate the additional control element provided in the main controller. When this happens, dedicated programming in the processing means causes the generation of a control signal for the auxiliary device that is electrically transmitted thereto through the above-mentioned electric connection.

The auxiliary controller can be configured to make up together with the main controller a compact and visually attractive assembly, such as they appear to be a single block.

In a particularly preferred embodiment of the invention, the control element of the main controller is provided at a sear face of the housing opposite the front face. The rear face is the face opposite the bar of the handlebar to which the main controller is fixed. This position makes the control element, e.g. simply a pushbutton, not visible once the main controller is installed.

On the other hand, as discussed earlier, the coupling between the auxiliary controller and the main controller is configured in such a manner as to allow the movement of one with respect to the other, where this movement includes rotation, displacement, a combination of both, or even an elastic deformation. The main concept in this connection is that the movement causes the actuation of the control element of the main controller.

Specifically, in a particularly preferred embodiment of the invention, the coupling between both controllers is of the swinging or rocking type between a rest position and an actuation position. Further, a spring biases the auxiliary controller towards the rest position. Thus, when said auxiliary controller is manually actuated, said auxiliary controller swings with respect to the main controller from the rest position to the actuation position, thus causing the actuation of the control element. That is, thanks to this configuration, by means of a precise positioning of the auxiliary controller and of the trajectory of the swinging movement, in the rest position there is no mechanical interaction between the auxiliary controller and the control element of the main controller, while in the actuation position the control element is actuated (for example, the pushbutton is pushed).

In a yet more preferred embodiment of the invention, the auxiliary device comprises a pulsation end, an actuation end, and a second fixation means provided between both ends of the auxiliary controller. This second fixation means is couplable in a swinging manner to a first fixation means of the main controller. Thus, a manual pulsation in a first direction onto the pulsation end of the auxiliary controller causes the actuation end to move in the opposite direction to actuate the control element.

In principle, the coupling between the main controller and the auxiliary controller could be of any type provided it allows for the above-mentioned swinging movement. For example, a coupling could be devised where the first fixation means of the main controller is a threaded orifice and the second fixation means of the auxiliary controller is a cavity for a screw. In this context, it is understood that the cavity has a diameter allowing for the passage of the screw shank but not the screw head. Thus, when a screw is passed through the cavity of the auxiliary controller and threaded into the orifice of the main controller, the auxiliary controller is rotatable around a rotation axis coincident with the screw axis. The spring biasing the auxiliary controller from the rest position towards the actuation position can in this case be a helical spring fixed to the screw or to some fixed element of the main controller.

As mentioned earlier, the control element of the main controller could potentially be provided in any position, although non-visible positions when installed in the handlebar of the bicycle are preferred. This is also applicable to the first fixation means of the main controller, which will normally be also placed in a hidden position. Specifically, in a particularly preferred embodiment of the invention, it is placed at the handlebar connection means, which is joined to the rear face of the housing. In his context, the term *"joined"* includes both a dismountable fixation of the handlebar connection means and an integral production of the housing along with the handlebar connection means.

In still another preferred embodiment of the invention, the rotation axis of the auxiliary controller is parallel to the rear face of the housing. Further, the actuation end of the auxiliary controller is displaced with respect to the pulsation end in the direction of said rotation axis. Thanks to this configuration, when the auxiliary controller is coupled to the handlebar connection means of the main controller, the pulsation end projects from the housing in a direction in parallel to the plane of said rear face and is visible from the front side, while the actuation end, upon rotating, bumps against the rear face of the housing and thereby actuates the control element.

### Main controller

A second aspect of the present invention is directed to a main controller for an electric bicycle control system like that disclosed in the previous paragraphs.

As mentioned earlier, the main controller is configured to control the pedal assist power of an electric motor of the electric bicycle, comprising: a housing, a handlebar connection means joined to said housing, a processing means housed within said housing, and pushbuttons provided at a front face of the housing and connected to said processing means to select different pedal assist modes.

This main controller differs from a conventional controller by further comprising:
- A control element electrically connected to the processing means, where said control elements is mechanically actuated from outside the housing. The control element could be, for example, a pushbutton, and it may be provided at a rear face of the housing opposite the front face.
- A first fixation means for the mechanical coupling in a movable and dismountable manner of an auxiliary controller for controlling an auxiliary device of the bicycle different from the pedal assist motor. The first fixation means could simply be a threaded orifice for the coupling, in a swinging manner, of the auxiliary controller by means of a thread. The first fixation means may be provided at the handlebar connection means. In any case, when said auxiliary controller is coupled to the first fixation means, a manual actuation of the auxiliary controller causes said auxiliary controller to move and thereby mechanically actuate the control element.

Further, the processing means is configured such that, when a manual actuation of the auxiliary controller causes the actuation of the control element, said processing means generates a control electric signal for the auxiliary device of the bicycle.

### Auxiliary controller

A third aspect of the present invention is directed to an auxiliary controller configured for controlling an auxiliary device of the bicycle different from the pedal assist electric motor.

The auxiliary controller is mechanically couplable to an electric bicycle main controller configured for controlling the pedal assist power provided by an electric motor. Further, the auxiliary controller advantageously comprises a second fixation means for a mechanical coupling, in a movable and dismountable manner, to the main controller. Thereby, a manual actuation of the auxiliary controller causes a movement of said auxiliary controller that, in turn, mechanically actuates a control element of the main controller.

In a particularly preferred embodiment, the auxiliary controller comprises a pulsation end and an actuation end between which the second fixation means is provided. The second fixation means is couplable to the main controller in a swinging manner between a rest position and an actuation position. Further, a spring biases the auxiliary controller towards the rest position. Thus, a manual pulsation in a first direction onto the pulsation end of the auxiliary controller in the rest position causes the actuation end to move towards the actuation position in the opposite direction to actuate the control element. Normally, the auxiliary controller is configured such that the pulsation takes place in the same direction as the pulsation of the conventional pushbuttons of the main controller. That is, when the auxiliary device is installed, the pulsation end has a surface that is essentially parallel to the front face of the housing of the main controller.

Preferably, the second fixation means of the auxiliary controller is a cavity for a screw. Thus, when a screw is passed through the cavity of said auxiliary device and threaded into the main controller, the auxiliary controller is rotatable around a rotation axis coincident with the axis of said screw.

In another preferred embodiment, the actuation end is displaced with respect to the pulsation end in the direction of the rotation axis of the auxiliary controller. Thereby, when the auxiliary controller is coupled to a handlebar connection means joined to the rear face of the housing of the main controller, the pulsation end projects from the housing in a direction parallel to the plane of the rear face and is visible from the front side, while the actuation end, upon rotating, bumps into the rear face of the housing and thereby actuates the control element.

### Brief description of the figures

The details of the invention are shown in the accompanying figures, which are not to be interpreted as limiting the scope of the invention:
Fig. 1 schematically shows a conventional electric bicycle.
Fig. 2 schematically shows a conventional controller of a pedal assist motor.
La Fig. 3 shows a control system formed by a main controller and an auxiliary controller coupled one to the other according to the present invention.
Fig. 4 shows a perspective view of a control system formed by a main controller and an auxiliary controller according to the present invention.
Fig. 5 schematically shows the connections between the different elements making up the control system of the invention.

### Detailed description of the invention

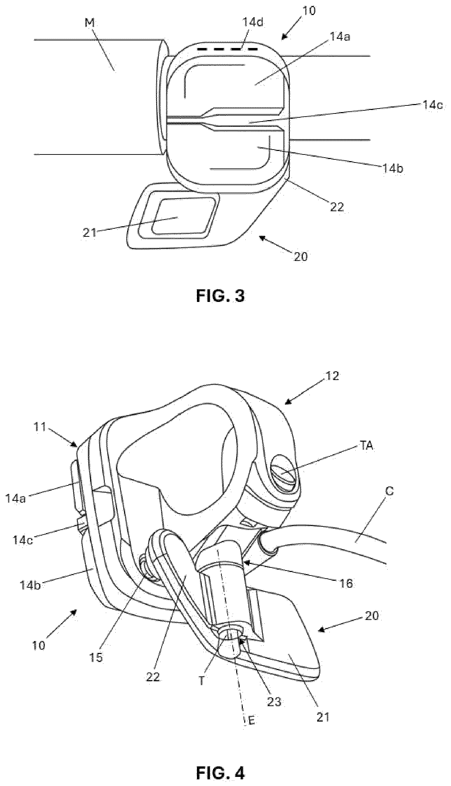

An electric bicycle control system according to the invention is disclosed with reference to Figs. 3-5.

Figs. 3 and 4 are two views of the respectively front and rear external appearance of the control system of the invention showing the most important components. As shown, the system is formed by a main controller (10) and an auxiliary controller (20) that is mechanically coupled to the main controller (10).

The main controller (10) has essentially the same external aspect as a conventional controller for controlling the power of the pedal assist electric motor of an electric bicycle, as it is evident by comparing Fig. 3, showing the system of the invention, with the view of Fig. 2, showing a conventional electric bicycle controller. The main controller (10) of the invention is formed by a housing (11) having an internal cavity where a processing means (13) is housed, and having a handlebar connection means (12).

The shape of the housing (11), which may be formed by several parts, is essentially a rectangular prism having a small thickness and front and rear main faces. The rear face is intended to be fixed to the handlebar (M) of the bicycle (B), and therefore it is not visible for the cyclist when riding on the bicycle (B). The front face is intended to be placed in front of the cyclist when the main controller (10) is fixed to the handlebar (M). There are several pushbuttons (14a, 14b) and indicators (14c, 14d) on the front face for controlling the pedal assist power. Specifically, in this example the main controller (10) has two pushbuttons (14a, 14b) for increasing or reducing the pedal assist power, a first light indicator (14c) for showing the cyclist the current pedal assist power, and a second light indicator (14d) for showing the cyclist the current battery charge level.

The handlebar connection means (12) is joined to the rear face of the housing (11) and, in this example, is shaped as a clamp designed to clamp the handlebar (M), the connection being tightened by means of a tightening screw (TA).

The processing means (13) is housed within the housing (11), and it is in electrical communication with the pushbuttons (14a, 14b) and the indicators (14c, 14d). The processing means (13) also has one or several outlets electrically connected to the elements of the pedal assist system to be controlled, mainly the battery and the pedal assist electric motor. These electric connections come out of the housing (11) by means of a cable (C) running along the handlebar and the frame of the bicycle (B) for finally reaching said elements. The processing means (13) is internally programmed for controlling the aforementioned elements according to the commands from the cyclist received through the pulsation of the pushbuttons (14a, 14b).

According to the present invention, the main controller (10) further has several additional elements allowing for controlling an additional device of the bicycle different from those of the pedal assist system, in this example specifically the telescopic seatpost (TT).

Thereto, the main controller (10) has a control element (15) in addition to the aforementioned pushbuttons (14a, 14b). This control element (15) is in this example a button provided on the rear face of the housing (11), said button being electrically connected to the processing means (13). Further, the processing means (13) is programmed in such a manner that, upon receiving an electrical signal corresponding to the pulsation of the button (15), it commands several actions in connection to the control of the telescopic seatpost (TT). For example, when this button (15) is pushed, the processing means (13) sends an electric signal to an electric motor of the telescopic seatpost (TT) to unlock the retraction/extension capacity. Thereto, the processing means (13) further has an outlet connected to an electrical connection with the electric motor controlling the state of the telescopic seatpost (TT). This electrical connection may also be routed by the cited cable (C), along with those intended for the control of the pedal assist system.

To enable the user to control the telescopic seatpost (TT), the system of the invention also comprises an auxiliary controller (20). The auxiliary controller (20) is coupled to the main controller (10) in such a manner that, visually and in practice, the main controller (10) is provided with an additional pushbutton whose pulsation causes the pulsation of the button (15) mentioned earlier.

Thereto, the main controller (10) has a first fixation means (16) configured for the fixation of a first fixation means (23) of the auxiliary controller (20). More specifically, the first fixation means (16) is a threaded orifice made at an area of the clamp making up the handlebar connection means (12) near the place where the button (15) is provided.

On the other hand, the auxiliary controller (20) has a body formed by a pulsation end (21), an actuation end (22) opposite the pulsation end (21), and a second fixation means (23) provided between both ends (21, 22). The second fixation means (23) is designed for the fixation of the auxiliary controller (20) to the first fixation means (16) of the main controller (10) in a swinging manner, thereby alternating between a rest position and an actuation position. Specifically, the second fixation means (23) comprises a cylindrical orifice with a shoulder at one end to impede the head of a screw (T) from coming out. Thus, to couple the auxiliary controller (20) to the main controller (10) the screw (T) is inserted through said cylindrical orifice and threaded into the threaded orifice making up the first fixation means (16). The auxiliary controller (20) is thus joined in a swinging manner, thereby rotating around an axis (E) that coincides with the axis of the screw (T). Normally, the direction of the rotation axis (E) is essentially parallel to the front face of the housing (11).

Further, the connection between the main controller (10) and the auxiliary controller (20) comprises a spring biasing continuously the auxiliary controller (20) towards the rest position. This spring is now shown in the figures, and it can be configured in different manners.

The shape of the body of the auxiliary controller (20) is configured in such as manner that, when it is coupled to the main controller (10), the pulsation end (21) projects from under the housing (11) of the main controller (10) in a plane essentially parallel to the front face of said housing (11). This position is clearly shown in Fig. 3, where the appearance of the pulsation end (21) of the auxiliary controller (20) is forming part as a whole with the main controller (10). Also, note that the rest of the auxiliary controller (20) is not visible from the front side of the housing (11) of the main controller (10).

The actuation end (22) of the auxiliary controller (20), on the other hand, is provided in such a manner that, when the auxiliary controller (20) swings upon the cyclist pushing onto the pulsation end (21), it follows a trajectory that ends up pushing the button (15). Thereto, the actuation end (22) is displaced with respect to the pulsation end (21) in the direction of the axis (E) of rotation. Additionally, in this example the actuation end (22) is essentially parallel to a plane that forms a small angle with respect to a plane parallel to the pulsation end (21), e.g. an angle of about 15-30°. This inclination allows for the pulsation end (21) to be a little advanced forward with respect to the rear face of the housing (11) of the main controller (10), the actuation end (22) being located somewhat backwards and sufficiently separated from the rear face of the housing (11) as to selectively push the button (15) provided thereon. Thus, when the auxiliary controller (20) is in the rest position, the actuation end (22) is separated from the rear face of the housing (11) a certain distance such that the button (15) is not pushed, although close or even touching said button (15). On the contrary, when the auxiliary controller (20) is in the actuation position, the actuation end (22) is closer to the rear face of the housing (11) in such a manner that the button (15) is pushed.

In short, when the auxiliary controller (20) is fixed to the main controller (10) in the manner disclosed above, the pulsation end (21) of the auxiliary controller (20) visually makes up an additional button of the main controller (10). With this configuration, when the cyclist pushes the pulsation end (21) of the auxiliary controller (20), the force of the spring is overcome and the auxiliary controller (20) is passed from the rest position to the actuation position, thereby automatically causing the pulsation of button (15). And upon receiving the electric signal corresponding to the pulsation of button (15), the processing means (13) sends the programmed electrical signals to the electric motor that unlocks the telescopic seatpost (TT).

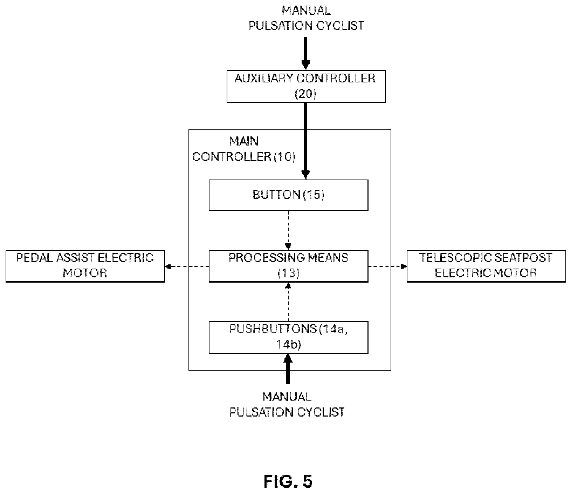

Fig. 5 shows a schematic diagram of the described configuration. Thick lines represent mechanical pulsations, while discontinuous lines represent electrical connections.

Thanks to this configuration, the main controller (10) can be sold alone. The main controller (10) has button (15) and the first fixation means (16), although both are provided in a zone that is not visible when the main controller (10) is fixed to the handlebar (M). Further, part of the code programmed into the processing means (13) of the main controller (10) is intended to control the telescopic seatpost (TT) when the pulsation of button (15) is detected. However, these elements are out of use until an auxiliary controller (20) is installed.

Some time later, the cyclist may decide to buy a system for controlling the telescopic seatpost (TT). To install it, he/she fixed the auxiliary controller (20) to the main controller (10) in the manner disclosed above, the installation requiring only the placement of a screw (T). The spring biases the auxiliary controller (20) towards the rest position, such that the actuation end (22) of said auxiliary controller (20) is just adjacent the button (15) but it does not push it. In addition, the cyclist installs the telescopic seatpost (TT) in the normal position between the seat (S) and the frame (CU), and he/she provides an electric cable connecting the electric motor unlocking the telescopic seatpost (TT) with a predetermined output of the processing means (13) of the main controller (10). This outlet can be provided at a suitable easily accessible position, either upon dismounting the housing (11) or else through an orifice of said housing (11).

Once all this is done, the control system for the telescopic seatpost (TT) is completely installed and operative. When the cyclist pushes the pulsation end (21) of the auxiliary controller (20), the button (15) of the main controller (10) is actuated and, in response, the processing means carries out the programmed actions, e.g. simply activating the electric motor in question for unlocking the telescopic seatpost (TT).

## Claims

1. Control system for electric bicycle comprising a main controller (10) and an auxiliary controller (20) mechanically couplable to the main controller (10),
where the main controller (10) is configured for controlling the pedal assist power of an electric motor of the electric bicycle, said main controller (10) comprising: a housing (11), a handlebar connection means (12) joined to said housing (11), a processing means (13) housed within said housing (11), and pushbuttons (14a, 14b) provided at a front face of the housing (11) and connected to said processing means (13) to select different pedal assist modes, and
where the auxiliary controller (20) is configured for controlling an auxiliary device of the bicycle different from the pedal assist electric motor,
**characterized in that**
- the main controller (10) further comprises a control element (15) electrically connected to the processing means (13), where said control element (15) is mechanically actuable from outside the housing (11); and
- the auxiliary controller (20) is mechanically couplable in a mobile and dismountable manner to the main controller (10), such that a manual actuation of the auxiliary controller (20) causes a movement in said auxiliary controller (20) that causes the mechanical actuation of the control element (15),
and where the processing means (13) is electrically connectable to the auxiliary device such that, when a manual actuation of the auxiliary controller (20) causes the actuation of the control element (15), said processing means (13) generates an electric control signal for the auxiliary device of the bicycle.

2. System according to claim 1, where the control element (15) is provided on a rear face of the housing (11) opposite the front face.

3. System according to any of the previous claims, where the control element (15) is a pushbutton.

4. System according to any of the previous claims, where the coupling between the main controller (10) and the auxiliary controller (20) is a swinging-type coupling between a rest position and an actuation position, and where a spring continuously biases the auxiliary controller (20) towards the rest position, such that when said auxiliary controller (20) is manually actuated, the auxiliary controller (20) swings with respect to the main controller (10) from the rest position towards the actuation position whereby the control element (15) is actuated.

5. System according to claim 4, where the auxiliary controller (20) comprises a pulsation end (21), an actuation end (22), and a second fixation means (23) provided between both ends (21, 22) of the auxiliary controller (20), where said second fixation means (23) is couplable in a swinging manner to a first fixation means (16) of the main controller (10), such that a manual pulsation in a first direction onto the pulsation end (21) of the auxiliary controller (20) causes the actuation end (22) to move in the opposite direction to actuate the control element (15).

6. System according to claim 5, where the first fixation means (16) of the main controller (10) is a threaded orifice and the second fixation means (23) of the auxiliary controller (20) is a cavity for a screw (T), such that when a screw (T) is passed through the cavity of the auxiliary controller (20) and is threaded into the orifice of the main controller (10), the auxiliary controller (20) is rotative around a rotation axis (E) that is coincident with the axis of the screw (T).

7. System according to any of claims 5-6, where the first fixation means (16) of the main controller (10) is provided in the handlebar connection means (12), which is joined to the rear face of the housing (11).

8. System according to claim 7, where the axis of rotation (E) of the auxiliary controller (20) is parallel to the rear face of the housing (11), and where the actuation end (21) of the auxiliary controller (20) is displaced with respect to the pulsation end (22) in the direction of said rotation axis (E) such that, when the auxiliary controller (20) is coupled to the handlebar connection means (12) of the main controller (10), the pulsation end (21) projects from the housing (11) in a direction parallel to the plane of its rear face and is visible from its front side, while the actuation end (22), upon rotating, bumps into the rear face of the housing (11) and thereby actuates the control element (15).

9. System according to any of the previous claims, where the auxiliary device of the bicycle controlled by the auxiliary controller (20) is a telescopic seatpost (TT).

10. Main controller (10) for an electric bicycle control system, configured for controlling the pedal assist power of an electric motor of the electric bicycle, said main controller (10) comprising: a housing (11), a handlebar connection means (12) joined to said housing (11), a processing means (13) housed within said housing (11), and pushbuttons (14a, 14b) provided on a front face of said housing (11) and connected to said processing means (13) to select different pedal assist modes,
**characterized by** further comprising:
- a control element (15) electrically connected to the processing means (13), where said control element (15) is mechanically actuable from outside the housing (11); and
- a first fixation means (16) for mechanically coupling in a mobile and dismountable manner an auxiliary controller (20) for controlling an auxiliary device of the bicycle different from the pedal assist motor, such that, when said auxiliary controller (20) is coupled, a manual actuation onto the auxiliary controller (20) causes a movement in said auxiliary controller (20) that, in turn causes the mechanical actuation of the control element (15), the processing means (13) being configured such that, when a manual actuation of the auxiliary controller (20) causes the actuation of the control element (15), said processing means (13) generates an electric control signal for the auxiliary device of the bicycle.

11. Main controller (10) according to claim 10, where the control element (15) is provided on a rear face of the housing (11) opposite the front face.

12. Main controller (10) according to any of claims 10-11, where the control element (15) is a pushbutton.

13. Main controller (10) according to any of claims 10-12, where the first fixation means (16) is a threaded orifice for coupling the auxiliary controller (20) by means of a screw (T).

14. Main controller (10) according to any of claims 10-13, where the first fixation means (16) is provided in the handlebar connection means (12), which is joined to the rear face of the housing (11).

15. Auxiliary controller (20) configured for controlling an auxiliary device of the bicycle different from the pedal assist electric motor, where said auxiliary controller (20) is mechanically couplable to an electric bicycle main controller (10) configured for controlling the pedal assist electric motor **characterized by** comprising
a second fixation means (23) for mechanically coupling the main controller (10) in a mobile and dismountable manner, such that a manual actuation of the auxiliary controller (20) causes a movement of said auxiliary controller (20) that, in turn, causes the mechanical actuation of a control element (15) of the main controller (10).

16. Auxiliary controller (20) according to claim 15, comprising a pulsation end (21) and an actuation end (22) between which the second fixation means (23) is provided, where the second fixation means (23) is couplable to the main controller (10) in a swinging manner between a rest position and an actuation position, and where a spring continuously biases the auxiliary controller (20) towards the rest position, such that a manual pulsation in a first direction onto the pulsation end (21) of the auxiliary controller (20) in the rest position causes the displacement of the actuation end (22) in the opposite direction towards the actuation position to actuate the control element (15).

17. Auxiliary controller (20) according to claim 16, where the second fixation means (23) of the auxiliary controller (20) is a cavity for a screw (T), such that when a screw (T) passes through the cavity of said auxiliary controller (20) and is threaded into the main controller (10), the auxiliary controller (20) is rotative around an axis of rotation (E) that is coincident with the axis of the screw (T).

18. Auxiliary controller (20) according to any of claims 16-17, where the actuation end (22) is displaced with respect to the pulsation end (21) in the direction of the axis of rotation (E) of the auxiliary controller (20) such that, when the auxiliary controller (20) is coupled to a handlebar connection means (12) joined to the rear face of the housing (11) of the main controller (10), the pulsation end (21) projects from the housing (11) in a direction parallel to the plane of its rear face and is visible from its front side, while the actuation end (22), upon rotating, bumps into the rear face of the housing (11) and thereby actuates the control element (15).

## Amended claims

### Amended claims in accordance with Rule 137(2) EPC.

1. Control system for electric bicycle comprising a main controller (10) and an auxiliary controller (20) mechanically couplable to the main controller (10),
where the main controller (10) is configured for, when the electric bicycle does not have the auxiliary controller (20), autonomously controlling the pedal assist power of an electric motor of the electric bicycle, said main controller (10) comprising: a housing (11), a handlebar direct connection means (12) joined to a rear face of said housing (11), a processing means (13) housed within said housing (11), and pushbuttons (14a, 14b) provided at a front face of the housing (11) and connected to said processing means (13) to select different pedal assist modes, and
where the auxiliary controller (20) is configured for controlling an auxiliary device of the bicycle different from the pedal assist electric motor,
**characterized in that**
- the main controller (10) further comprises a control element (15) electrically connected to the processing means (13), where said control element (15) is mechanically actuable from outside the housing (11); and
- the auxiliary controller (20) is mechanically couplable in a mobile and dismountable manner to the main controller (10), such that a manual actuation of the auxiliary controller (20) causes a movement in said auxiliary controller (20) that causes the mechanical actuation of the control element (15),
and where the processing means (13) is electrically connectable to the auxiliary device such that, when a manual actuation of the auxiliary controller (20) causes the actuation of the control element (15), said processing means (13) generates an electric control signal for the auxiliary device of the bicycle.

2. System according to claim 1, where the control element (15) is provided on the rear face of the housing (11) opposite the front face.

3. System according to any of the previous claims, where the control element (15) is a pushbutton.

4. System according to any of the previous claims, where the coupling between the main controller (10) and the auxiliary controller (20) is a swinging-type coupling between a rest position and an actuation position, and where a spring continuously biases the auxiliary controller (20) towards the rest position, such that when said auxiliary controller (20) is manually actuated, the auxiliary controller (20) swings with respect to the main controller (10) from the rest position towards the actuation position whereby the control element (15) is actuated.

5. System according to claim 4, where the auxiliary controller (20) comprises a pulsation end (21), an actuation end (22), and a second fixation means (23) provided between both ends (21, 22) of the auxiliary controller (20), where said second fixation means (23) is couplable in a swinging manner to a first fixation means (16) of the main controller (10), such that a manual pulsation in a first direction onto the pulsation end (21) of the auxiliary controller (20) causes the actuation end (22) to move in the opposite direction to actuate the control element (15).

6. System according to claim 5, where the first fixation means (16) of the main controller (10) is a threaded orifice and the second fixation means (23) of the auxiliary controller (20) is a cavity for a screw (T), such that when the screw (T) is passed through the cavity of the auxiliary controller (20) and is threaded into the orifice of the main controller (10), the auxiliary controller (20) is rotative around a rotation axis (E) that is coincident with the axis of the screw (T).

7. System according to any of claims 5-6 when dependent on claim 2, where the first fixation means (16) of the main controller (10) is provided in the handlebar connection means (12), which is joined to the rear face of the housing (11).

8. System according to claim 7 when dependent on claim 6, where the axis of rotation (E) of the auxiliary controller (20) is parallel to the rear face of the housing (11), and where the actuation end (21) of the auxiliary controller (20) is displaced with respect to the pulsation end (22) in the direction of said rotation axis (E) such that, when the auxiliary controller (20) is coupled to the handlebar connection means (12) of the main controller (10), the pulsation end (21) projects from the housing (11) in a direction parallel to the plane of its rear face and is visible from its front side, while the actuation end (22), upon rotating, bumps into the rear face of the housing (11) and thereby actuates the control element (15).

9. System according to any of the previous claims, where the auxiliary device of the bicycle controlled by the auxiliary controller (20) is a telescopic seatpost (TT).

10. Main controller (10) for an electric bicycle control system configured for, when the electric bicycle does not have an auxiliary controller (20), autonomously controlling the pedal assist power of an electric motor of the electric bicycle, said main controller (10) comprising: a housing (11), a handlebar direct connection means (12) joined to a rear face of said housing (11), a processing means (13) housed within said housing (11), and pushbuttons (14a, 14b) provided on a front face of said housing (11) and connected to said processing means (13) to select different pedal assist modes,
**characterized by** further comprising:
- a control element (15) electrically connected to the processing means (13), where said control element (15) is mechanically actuable from outside the housing (11); and
- a first fixation means (16) for mechanically coupling in a mobile and dismountable manner the auxiliary controller (20) for controlling an auxiliary device of the bicycle different from the pedal assist motor, such that, when said auxiliary controller (20) is coupled, a manual actuation onto the auxiliary controller (20) causes a movement in said auxiliary controller (20) that, in turn causes the mechanical actuation of the control element (15), the processing means (13) being configured such that, when a manual actuation of the auxiliary controller (20) causes the actuation of the control element (15), said processing means (13) generates an electric control signal for the auxiliary device of the bicycle.

11. Main controller (10) according to claim 10, where the control element (15) is provided on the rear face of the housing (11) opposite the front face.

12. Main controller (10) according to any of claims 10-11, where the control element (15) is a pushbutton.

13. Main controller (10) according to any of claims 10-12, where the first fixation means (16) is a threaded orifice for coupling the auxiliary controller (20) by means of a screw (T).

14. Main controller (10) according to claim 11 or to any of claims 12-13 when dependent on claim 11, where the first fixation means (16) is provided in the handlebar connection means (12), which is joined to the rear face of the housing (11).

15. Auxiliary controller (20) configured for controlling an auxiliary device of an electric bicycle different from a pedal assist electric motor, where said auxiliary controller (20) is mechanically couplable to an electric bicycle main controller (10) configured for, when the electric bicycle does not have the auxiliary controller (20), autonomously controlling the pedal assist electric motor
further comprising
a second fixation means (23) for mechanically coupling to the main controller (10) in a mobile and dismountable manner, such that a manual actuation of the auxiliary controller (20) causes a movement of said auxiliary controller (20) that, in turn, causes the mechanical actuation of a control element (15) of the main controller (10),
**characterized by** further comprising a pulsation end (21) and an actuation end (22) between which the second fixation means (23) is provided, where the second fixation means (23) is couplable to the main controller (10) in a swinging manner between a rest position and an actuation position, and where a spring continuously biases the auxiliary controller (20) towards the rest position, such that a manual pulsation in a first direction onto the pulsation end (21) of the auxiliary controller (20) in the rest position causes the displacement of the actuation end (22) in the opposite direction towards the actuation position to actuate the control element (15).

16. Auxiliary controller (20) according to claim 15, where the second fixation means (23) of the auxiliary controller (20) is a cavity for a screw (T), such that when the screw (T) passes through the cavity of said auxiliary controller (20) and is threaded into the main controller (10), the auxiliary controller (20) is rotative around an axis of rotation (E) that is coincident with the axis of the screw (T).

17. Auxiliary controller (20) according to claim 16, where the actuation end (22) is displaced with respect to the pulsation end (21) in the direction of the axis of rotation (E) of the auxiliary controller (20) such that, when the auxiliary controller (20) is coupled to a handlebar connection means (12) joined to a rear face of a housing (11) of the main controller (10), the pulsation end (21) projects from the housing (11) in a direction parallel to the plane of its rear face and is visible from its front side, while the actuation end (22), upon rotating, bumps into the rear face of the housing (11) and thereby actuates the control element (15).
